# EUROPEAN PATENT SPECIFICATION

(11) **EP 3 513 064 B1**
(45) Date of publication and mention of the grant of the patent: **09.09.2020**
(21) Application number: 17771331.0
(22) Date of filing: 14.09.2017
(51) Int. Cl.: F03D 1/06, F03D 80/30

(54) **BLADE TIP EXTENSION**
SCHAUFELSPITZENVERLÄNGERUNG
EXTENSION DE POINTE DE PALE

(30) Priority: 15.09.2016 DK PA201670716
(43) Date of publication of application: 24.07.2019
(73) Proprietor: Vestas Wind Systems A/S, 8200 Aarhus N (DK)
(72) Inventor: BARTON, Leon, Newport Isle of Wight PO30 5NP (GB); BOWER, Alan, Sandown Isle of Wight PO36 8QB (GB); LYKKEGAARD, Lasse, 7400 Herning (DK); SØGAARD, Morten Bagger, 8200 Århus N (DK)
(74) Representative: Vestas Patents Department
(86) International application number: PCT/DK2017/050295
(87) International publication number: WO 2018/050196

(56) References cited:
- EP-A1- 2 395 239
- EP-A1- 2 650 535
- EP-A2- 2 182 203
- EP-A2- 2 267 280
- US-A1- 2013 236 321

## Description

### Technical field

The present invention relates generally to wind turbine blades, and more specifically to a tip extension for a wind turbine blade and to a method of fitting the tip extension to a wind turbine blade.

### Background

There is a continuing desire to generate increased levels of power from existing wind power production facilities such as on-shore and off-shore wind farms. One way to achieve this is to add further wind turbines to a wind farm or to replace existing wind turbines with larger wind turbines capable of generating more power. Another way to achieve this is to increase the power production and energy capture from existing turbines, for example by replacing the blades with larger blades. However, as the blades of wind turbines are expensive components, it is often prohibitive in terms of cost to replace the blades.

It has therefore been proposed to modify the blades of existing wind turbines by adding devices to the blades. For example, it is known to add devices to the blades to increase the dimensions of the blades. One example of this is a blade tip extension, which may be provided in the form of a sleeve or sock that fits over the tip of a blade and increases the length of the blade. The provision of tip extensions increases the overall length of the blades and thus increases the swept area of the rotor, allowing the wind turbine to capture more energy from the wind.

The installation of blade tip extensions is technically challenging. The tip extensions must be fitted accurately to the blade and attached firmly. As the devices are typically installed to wind turbine blades in the field, the process is carried out by operators working at a significant height with exposure to often harsh climate conditions. It is therefore important to develop attachment processes that are both straightforward and reliable. To this end, the tip extensions should be designed to facilitate the attachment process.

Existing wind turbine blades often include a lightning protection system, which protects the blade from damage in the event of a lightning strike. The lightning protection system typically comprises a plurality of lightning receptors arranged at the surface of the blade and electrically connected to a down conductor cable running longitudinally inside the blade and connected to earth. It is known to include one or more lightning receptors in a tip extension, and these need to be electrically connected to the existing lightning protection system in the blade when the tip extension is fitted. However, the process of connecting the lightning receptors of the tip extension to the blade's lightning protection system can be difficult and tends to complicate the process of fitting the tip extension.

EP2395239A1 discloses a rotor blade assembly comprising a rotor blade with an integrated lightning down conductor and a rotor blade tip member adapted to be detachably attached to the blade. The blade tip member includes a lightning receptor. The blade tip member is connected to the blade by means of a wire or a rod that provides both a mechanical connection between the blade and the blade tip member, and an electrical connection between the lightning components of the blade and the tip member. Openings are provided in the tip member and/or the blade to provide access to the inside of the blade or tip member so that the rod can be locked to anchors provided in the blade and in the tip member.

### Summary of the invention

According to a first aspect of the present invention there is provided a wind turbine blade assembly comprising: a wind turbine blade having a tip end defining an end surface of the blade; a blade lightning protection system provided inside the blade and having a blade tip receptor block inside the tip end of the blade; a blade tip connector mounted at a predetermined position to the end surface of the blade and electrically connected to the blade tip receptor block; a tip extension in the form of a sock fitted over the tip end of the blade to extend the length of the blade, the tip extension including one or more lightning receptors; a tip extension connector fixed at a predetermined position inside the tip extension and electrically connected to the one or more lightning receptors of the tip extension; wherein the predetermined positions of the blade tip connector and the tip extension connector are selected such that when the tip extension is fitted to the blade, the connecters are mutually aligned and form a push-fit connection inside the tip extension.

The push fit connection provides a simple and effective means of connecting the lightning receptors of the tip extension to the blade's lightning protection system. The connection may be made blind inside the tip extension when the tip extension is pulled or pushed over the tip of the blade, and avoids the need for manual intervention or the creation of large access holes in the tip extension to establish the connection.

In preferred embodiments the blade-tip connector may extend from the end surface of the blade. However, other embodiments are envisaged in which the blade-tip connector may be recessed in the end surface of the blade.

The blade-tip connector and the tip-extension connector preferably form a plug-and-socket connection. One of the blade tip connector and the tip extension connector may be a female connector and the other connector may male connector. The female connector may comprise a socket, preferably a substantially cylindrical socket, whilst the male connector may be sized to fit within the socket. Preferably the male connector is an elongate connector. In preferred embodiments the blade tip connector is a female connector and the tip extension connector is a male connector, but the connectors may be reversed in other embodiments.

In embodiments where the female connector comprises a socket, one or more annular coil springs may be located within the socket. The coil spring(s) are preferably arranged to retain the male connector within the socket and to provide an electrical connection between the male and female connectors. The springs therefore advantageously provide both a mechanical and electrical connection between the male and female connectors. The one or more coil springs are preferably canted coil springs. Preferably a pair of axially spaced-apart coil springs are provided in the socket.

A connector plate may be attached to the end surface of the blade. The connector plate is preferably arranged at a predetermined location on the end surface. The connector plate may be electrically connected to the blade tip receptor block. The blade tip connector may project from the connector plate.

The connector plate may be attached to the end surface of the blade by one or more fixing devices. The fixing devices may be electrically connected to the blade tip receptor block. In preferred embodiments the one or more fixing devices may include or comprise one or more bolts that are screwed into the blade tip receptor block. The bolts are preferably made of metal, and preferably of brass, and provide a conductive path between the blade tip receptor block and the blade-tip connector.

The connector plate may include one or more mounting features arranged to enable a position of the fixing devices to be selected according to the location of the tip receptor block inside the blade to ensure an electrical connection to the tip receptor block. In preferred embodiments, the one or more mounting features may include or comprise an elongate slot. The elongate slot preferably extends in a chordwise direction. The position of the bolts or other fixing devices within the slot can be selected according to the location of the tip receptor block. This allows the position of the connector plate, and hence the blade-tip connector to be predetermined on the blade to align with the tip extension connector whilst accommodating variations in the position of the tip receptor block inside the blade. In other embodiments, instead of a slot, a plurality of holes could be provided in the connector plate with the appropriate hole(s) being selected for the fixing device(s) according to the position of the tip receptor block.

According to a second aspect of the present invention there is provided a tip extension for the wind turbine blade assembly described above. The tip extension is in the form of a sock and comprises an outer shell defining a substantially hollow interior for receiving a tip end of a wind turbine blade. The tip extension includes one or more lightning receptors and a tip extension connector fixed at a predetermined position within the interior of the tip extension and electrically connected to the lightning receptor(s). The tip-extension connector is arranged to form a push-fit connection with a blade tip connector provided at the tip end of the blade when the tip extension is fitted to the blade. The push-fit connection connects the lightning receptor(s) of the tip extension to a lightning protection system of the blade.

According to a third aspect of the present invention there is provided a method of fitting a tip extension to a wind turbine blade, the method comprising: providing a wind turbine blade having a lightning protection system inside the blade, the lightning protection system including a blade tip receptor block inside a tip end of the blade; attaching a blade tip connector to an end surface of the blade in a predetermined position; establishing an electrical connection between the blade tip connector and the blade tip receptor block; providing a tip extension in the form of a sock sized to fit over the tip end of the blade, the tip extension including one or more lightning receptors and a tip extension connector fixed in a predetermined position inside the tip extension and electrically connected to the one or more lightning receptors of the tip extension; and sliding the tip extension over the tip end of the blade; wherein the predetermined positions of the blade tip connector and tip extension connector are selected such that the two connectors are mutually aligned during fitting of the tip extension and such that sliding of the tip extension causes the two connectors to connect inside the tip extension to connect the one or more lightning receptors of the tip extension to the blade's lightning protection system. The two connectors, when they connect, form a push-fit connection inside the tip extension

The method may further comprise removing a tip of the wind turbine blade to define the end surface prior to fitting the tip extension to the blade.

The method may comprise attaching a connector plate comprising the blade tip connector to the end surface of the blade in a predetermined position.

The method may comprise attaching the connector plate by means of one or more fixing devices such as bolts that screw into the blade tip receptor block.

The method may comprise selecting the position of the bolts according to the position of the tip receptor block inside the blade.

Optional and advantageous features described in relation to one aspect of the invention apply equally to all aspects of the invention. Repetition of optional features and associated advantages is avoided for reasons of conciseness.

### Brief description of the drawings

Figure 1 shows a wind turbine comprising a plurality of blades fitted with tip extensions;
Figure 2 shows a tip end of a wind turbine blade fitted with a tip extension according to an embodiment of the present invention;
Figure 3 shows first and second half shells of the tip extension;
Figure 3a shows lightning protection components of the tip extension;
Figure 4 shows components of a lightning protection system already present inside the blade;
Figure 5 shows a tip end of the blade when prepared for fitting of the tip extension;
Figure 6 shows the tip extension fitted to the blade and illustrates the lightning protection components of the tip extension connecting with the lightning protection system in the blade;
Figure 7a shows a connector plate including a female connector for attaching to a tip end of the blade;
Figure 7b shows a male connector of the tip extension;
Figure 8 shows the connector plate of Figure 7a attached to an end surface of the blade and connected to the lightning protection system of the blade;
Figure 9 is a cross-section through a female connector in the form of a socket containing a pair of coil springs;
Figure 10 is a cross-sectional view showing a male connector received within the socket; and
Figure 11 shows a curved tip extension according to another embodiment of the present invention fitted to a tip end of a blade.

### Detailed description

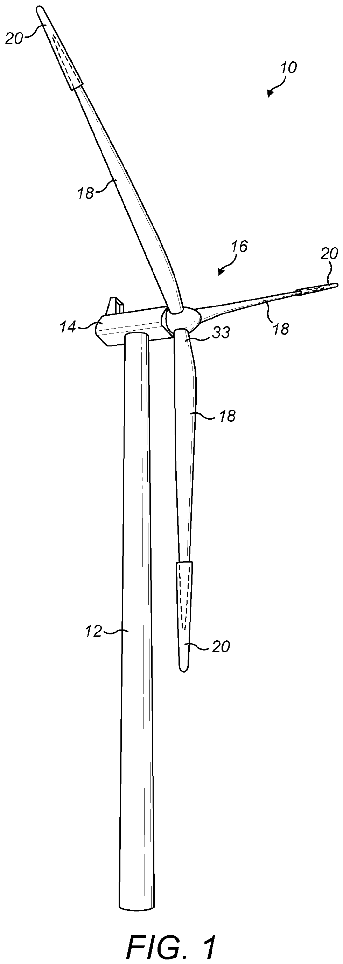

Figure 1 is a schematic view of a horizontal axis wind turbine 10 according to an embodiment of the present invention. The wind turbine 10 comprises a tower 12 supporting a nacelle 14. A rotor 16 is mounted to the nacelle 14. The rotor 16 comprises a plurality of wind turbine blades 18. In this example, the rotor 16 comprises three blades 18, but in other embodiments the rotor 16 may have any number of blades 18. Each blade 18 is retro-fitted with a blade tip extension (BTE) 20, which extends the effective length of the blade 18.

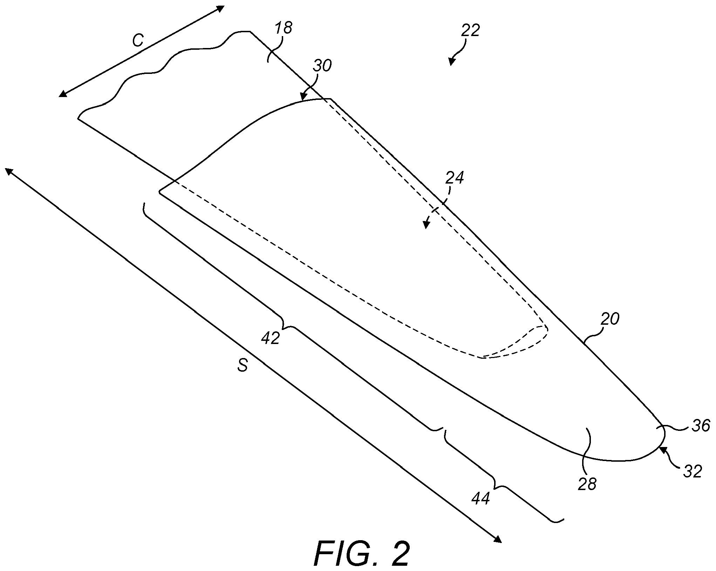

Figure 2 is a schematic view of a wind turbine blade assembly 22 comprising a wind turbine blade 18 fitted with a blade tip extension 20 according to an embodiment of the present invention. The blade tip extension 20 in this example is in the form of a sock, which fits over a tip end 24 of the blade 18. The tip extension 20 comprises an outer shell 28 defining a substantially hollow interior for receiving the tip end 24 of the blade 18.

The tip extension 20 has an inboard end 30 and an outboard end 32. When fitted to the blade 18, the inboard end 30 of the tip extension 20 is located closer to a root 33 (see Figure 1) of the blade 18 than the outboard end 32. The inboard end 30 of the tip extension 20 is open to receive the tip end 24 of the blade 18 to be extended. The outboard end 32 of the tip extension 20 is closed and comprises a tip 36, which forms the tip of the wind turbine blade assembly 22 when the tip extension 20 is fitted to the blade 18.

The outer shell 28 of the tip extension 20 extends longitudinally in a lengthwise ('spanwise') direction S between the open root end 30 towards the tip 36, and extends transversely in a widthwise ('chordwise') direction C between a leading edge 38 and a trailing edge 40. The outer shell 28 defines an airfoil profile in cross-section.

When fitted to the blade 18, an inboard portion 42 (also referred to as an 'overlap portion') of the tip extension 20 overlaps the tip end 24 of the blade 18, and is bonded to the blade 18. An outboard portion 44 of the tip extension 20, comprising the tip-extension tip 36, serves to extend the overall length of the blade 18.

In this example the blade tip extension 20 has an overall length of approximately three metres. The inboard portion 42 has a length of approximately two metres, whilst the outboard portion 44 has a length of approximately one metre. Accordingly, when fitted to an existing blade 18, the tip extension 20 extends the length of the blade 18 by approximately one metre, and provides a two-metre overlap. This size of tip extension is suitable for blades having an original length of approximately 40 metres. However, in other examples the tip extension may have other dimensions, and/or may be sized to fit blades having a different length. These dimensions are therefore exemplary only and are not intended to limit the scope of the invention.

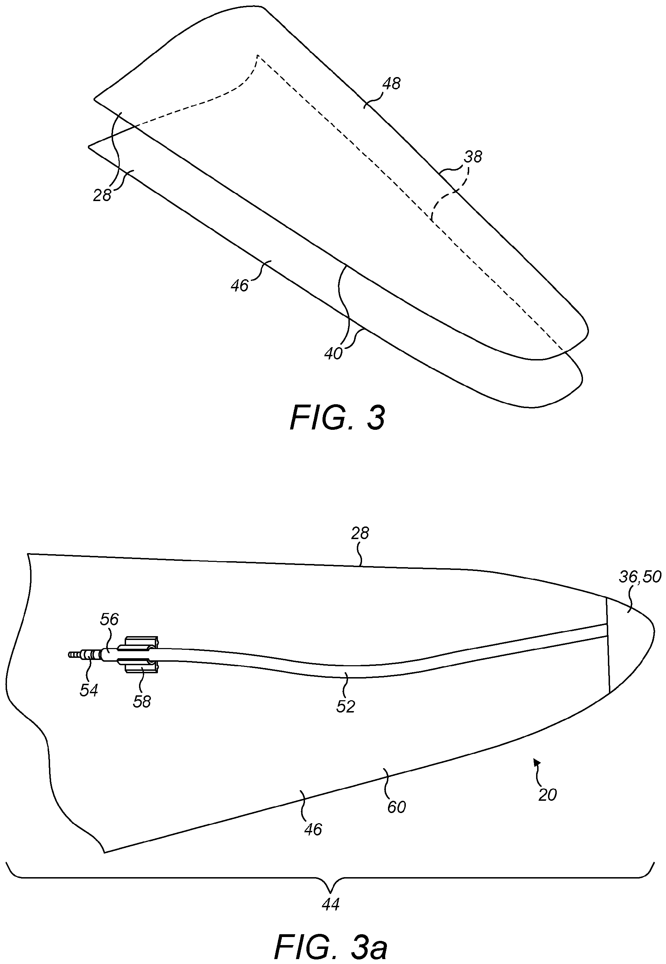

Referring to Figure 3, the outer shell 28 of the tip extension 20 in this example is formed from first and second half shells 46, 48, which are bonded along their leading and trailing edges 38, 40 to form the blade tip extension 20. However, in other examples the tip extension may be formed as a single piece. Each half shell 46, 48 in this example is of composite construction. The half shells 46, 48 are preferably each formed in a respective mould. The moulding process may involve resin infusion or prepreg techniques, which are known to the skilled person who is familiar with the construction of wind turbine blade shells.

For example, a typical resin infusion process may involve arranging a number of layers of reinforcing material such as glass- or carbon-fibre fabric in the mould to form a layup. The layup may be covered with a layer of vacuum film to form a sealed region encapsulating the layup. A vacuum pump may be used to remove air from the sealed region, and resin may be admitted into the sealed region. The resin infuses between the fabric layers. The resin subsequently cures to form the finished composite shells.

Referring now to Figure 3a, which is a schematic internal view of the outboard end 44 of the tip extension 20. The tip extension 20 includes lightning protection components 50, 52, 54. Specifically, the tip extension 20 includes a lightning receptor 50 at its tip 36. This lightning receptor 50 is referred to hereafter as the 'tip-extension tip receptor'. The tip-extension tip receptor in this embodiment comprises a metal tip 50, which forms the tip 36 of the tip extension 20. The metal tip 50 is preferably made from copper. In other embodiments, instead of a metal tip 50, the tip extension tip receptor may include a metal block, such as a brass block, inside the tip 36 and one or more bolts may be screwed through the outer shell 28 of the tip receptor 20 into this block to form the tip receptor(s).

A cable 52 extends from the metal tip 50 and is fitted with a connector 54 at its free end 56 for connecting to an existing lighting protection system present in the blade 18 to which the tip extension 20 is to be fitted. This connector 54 is hereafter referred to as the 'tip-extension connector' 54. In this example, the tip-extension connector 54 is a male connector, and more specifically is in the form of an elongate plug. A cable retainer 58 is affixed to an inner surface 60 of the first half shell 46 at a predetermined position. In this example the cable retainer 58 includes a clip or holder, which grips the cable 52 adjacent to the connector 54. The cable retainer 58 ensures that that the connector 54 is fixed securely in a predetermined position inside the tip extension 20.

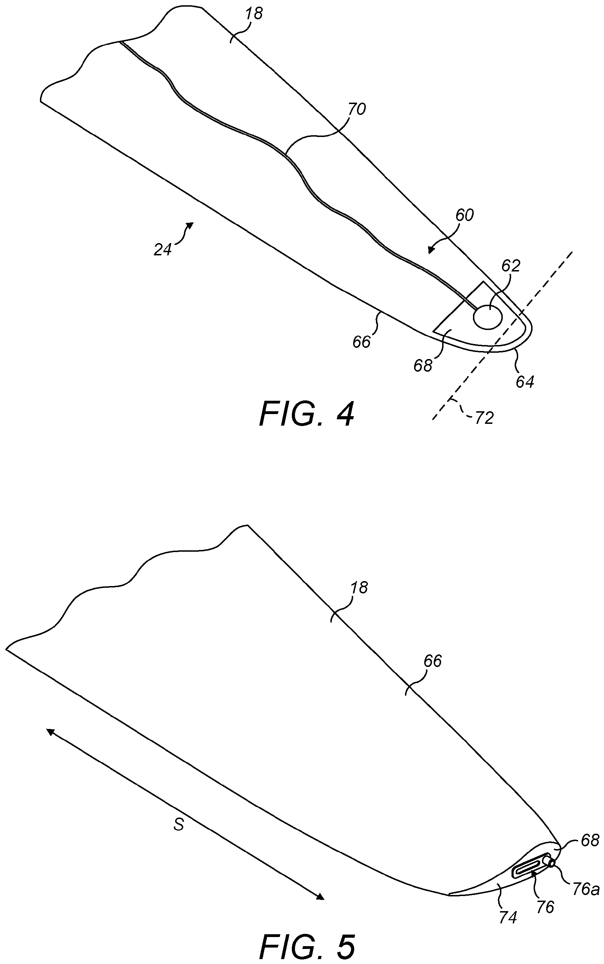

Figure 4 schematically shows the tip end 24 of the wind turbine blade 18 to which the tip extension 20 (not shown in Figure 4) is to be fitted. The blade 18 includes a lightning protection system 60. The lightning protection system 60 comprises a lightning receptor block 62 inside the tip 64 of the blade 18. In this example, the lightning receptor block 62 is a brass block. A lightning receptor (not shown), referred to as a 'blade tip receptor' and typically in the form of a brass bolt, is screwed through the outer shell 66 of the blade 18 and into the brass block 62. The lightning receptor block 62 is hereafter referred to as the 'blade tip receptor block' 62.

The blade tip receptor block 62 is encapsulates within a casted polyurethane implant 68 in the tip 64 of the blade 18. A down conductor cable 70 which may be in the form of a copper cable extends longitudinally inside the blade 18 between the receptor block 62 and the root end 33 (see Figure 1) of the blade 18 where it connects to an earthed connection. The blade tip receptor (not shown) is therefore connected to ground via the blade tip receptor block 62 and the down conductor cable 70. The blade 18 may also include further lightning receptors spaced at intervals on its outer surface, which may be connected to the down conductor 70 via suitable connectors.

As will now be described below, prior to attaching the tip extension 20, the tip end 24 of the existing blade is adapted or prepared to allow the lightning protection components 50, 52, 54 provided inside the tip extension 20 (see Figure 3a) to connect to the existing lightning protection system 60 already present inside the blade 18 when the tip extension 20 is fitted.

Figure 5 schematically illustrates the adaptions to the blade 18. Specifically, in this example, at least part of the tip 64 of the blade 18 (refer to Figure 4) is removed by cutting the blade 18 along the dashed line 72 shown in Figure 4. The cut is made through the outer shell 66 of the blade 18 and through the polyurethane implant 68 in the tip 64, outboard of the blade tip receptor block 62 (refer to Figure 4). This creates a blunt end surface 74 of the blade 18.

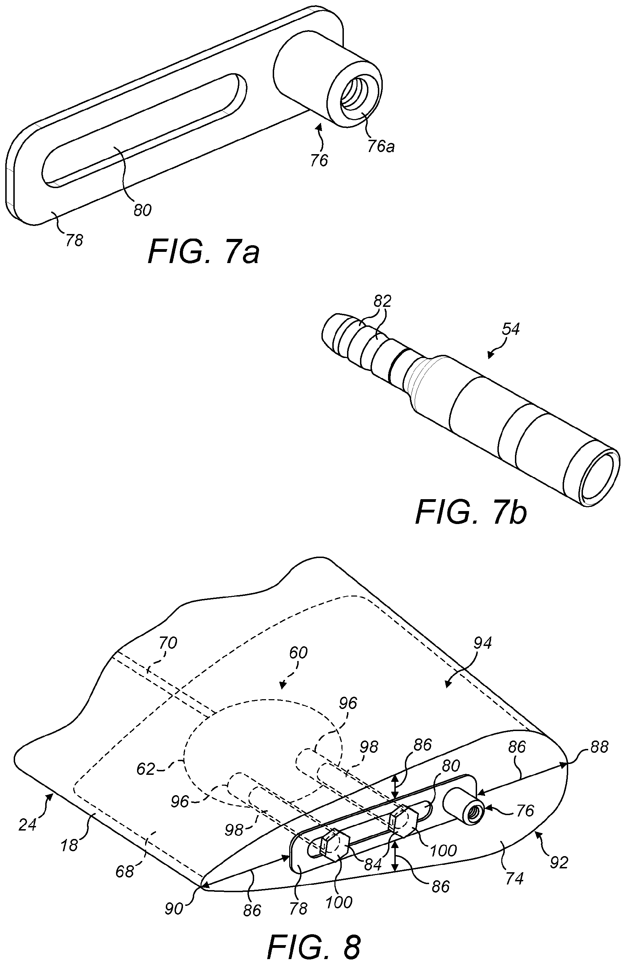

A connector 76 is attached to the blunt end surface 74 of the blade 18. The connector 76 projects from the end surface 74 of the blade 18, generally in the spanwise direction S. This connector 76 is hereafter referred to as the 'blade tip connector' 76. In this example, the blade tip connector 76 is a female connector and comprises a substantially cylindrical socket 76a, which can be seen more clearly in Figure 7a. As will be described in more detail later, the blade tip connector 76 is electrically connected to the lightning protection system 60 (indicated in Figure 4) provided in the blade 18.

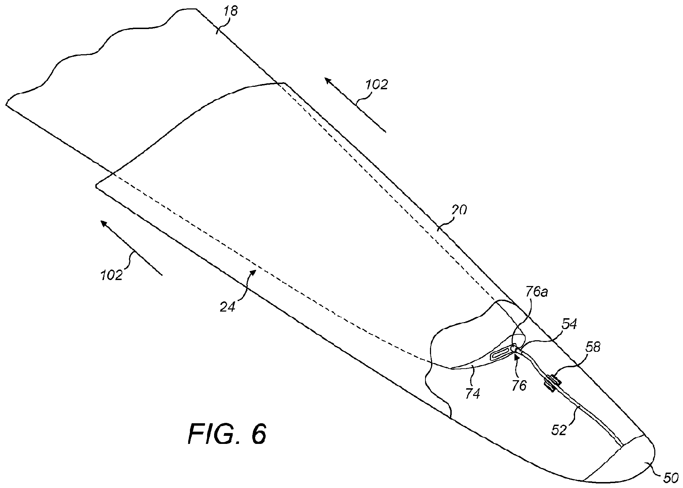

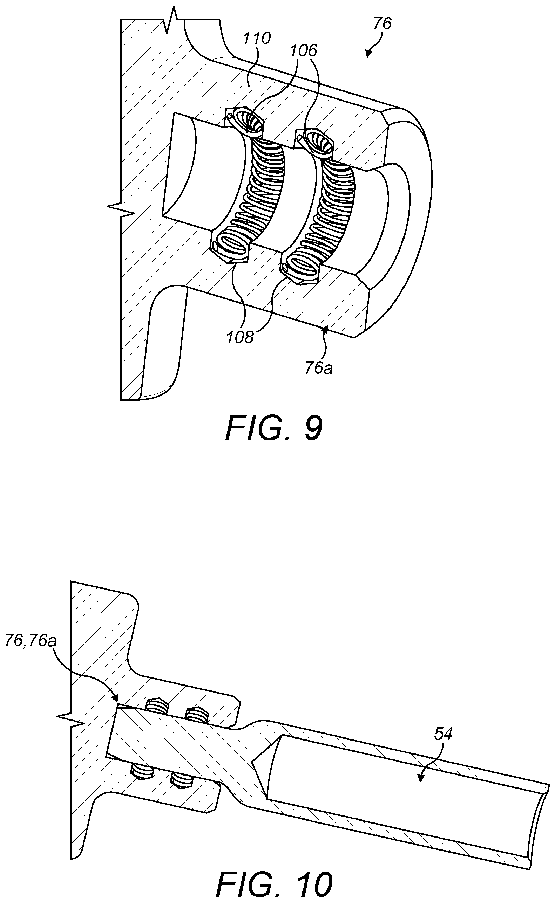

Referring now to Figure 6, when the tip extension 20 is fitted to the blade 18, the tip-extension connector 54 connects with the blade tip connector 76 to connect the tip-extension tip receptor 50 to the existing lighting protection system 60 (indicated in Figure 4) in the blade 18. The male tip-extension connector 54 in this example is sized to fit within the socket 76a of the female blade tip connector 76. The connectors 54, 76 preferably form a push-fit connection, an example of which will be described in more detail later with reference to Figures 9 and 10. When the tip extension 20 is fitted, e.g. pushed over the tip end 24 of the blade 18, the male connector 54 is pushed into the socket 76a attached to the end surface 74 of the blade 18. It can be seen in Figure 6 that the connection is made deep inside the tip extension 20, and is hence made 'blind' when the tip extension 20 is fitted. The lightning-protection components 50, 52, 54 provided in the tip extension 20 therefore effectively plug into the lightning-protection system 60 already present in the blade when the tip extension 20 is fitted.

Further details of the blade tip connector 76 and its attachment to the blade 18 will now be described.

Referring to Figure 7a, this shows a connector plate 78 comprising the blade tip connector 76. The connector plate 78 is substantially flat and includes a mounting feature in the form of an elongate slot 80. The blade tip connector 76 projects from the connector plate 78. The blade tip connector 76 and connector plate 78 are formed from bronze in this example. The blade tip connector 76 may be welded or otherwise attached to the connector plate 78 or formed integrally with the connector plate 78 for example by casting. Figure 7b shows the male tip-extension connector 54 in more detail. It can be seen that the elongate connector comprises a plurality of axially spaced annular grooves 82 on its outer surface. These grooves 82 engage with complementary features inside the socket 76a to secure the male connector 54 inside the socket 76a.

Figure 8 shows the connector plate 78 attached to the end surface 74 of the blade 18. The connector plate 78 is attached by fixing devices 84, which in this example are in the form of bolts 84 that extend through the elongate slot 80 in the connector plate 78.

It is important that the blade tip connector 76 is precisely positioned at a predetermined location on the end surface 74 of the blade 18 so that it aligns with the tip-extension connector 54 when the tip extension 20 is fitted to the blade 18. Prior to attaching the connector plate 78, the required location of the connector plate 78 is marked on the end surface 74 of the blade 18 by making measurements 86 from the leading edge 88, trailing edge 90 and pressure and suction surfaces 92, 94 of the blade 18. Alternatively, a template may be used or a suitable jig may be attached to the blade 18 to locate the connector plate 78. Once the required location of the connector plate 78 has been determined, the connector plate 78 may be offered up to the end surface 74 at the required location, and the perimeter of the connector plate 78 and elongate slot 80 may be marked on the end surface 74 for convenience.

After determining the required location of the connector plate 78, holes 96 are drilled through the end surface 74 of the blade 18 for the bolts 84. In this example, two bolts 84 are used to connect the connector plate 78 to the blade 18, hence two holes 96 are drilled. The holes 96 are drilled within the marked position of the elongate slot 80 through the polyurethane implant 68 in the tip end 24 of the blade 18 and into the brass block 62. The holes 96 are then tapped to provide a screw thread for the bolts 84.

Once the tapped holes 96 have been created, the connector plate 78 is offered-up once again to the end surface 74 of the blade 18 and the bolts 84 are screwed into the holes 96. The shafts 98 of the bolts 84 extend into the brass block 62 inside the blade 18 whilst the heads 100 of the bolts 84 clamp the connector plate 78 to the end surface 74 of the blade 18. The bolts 84 are made of metal, and preferably of brass, and provide a conductive path between the brass block 62 inside the blade 18 and the blade-tip connector 76 via the connector plate 78.

The position of the brass block 62 inside the blade 18 may not be precisely defined during construction of the blade 18 and may vary slightly within an accepted tolerance from one blade to another. The provision of the slot 80 in the connector plate 78 is advantageous since it allows the bolts 84 to be positioned anywhere within the slot 80, and therefore the holes 96 can be created within the limits of the slot 80 in appropriate locations that ensure that the holes 96 extend into the brass block 62. The slot 80 therefore accommodates a range of chordwise positions of the bolts 84. This allows the connector plate 78 to be fixed to the end surface 74 in a predetermined location such that the blade tip connector 76 is fixed in a predetermined position, with the slot 80 offering the freedom to select appropriate locations for the bolts 84 so that variations in the position of the blade tip receptor block 62 can be accommodated.

In other examples, alternative mounting features may be provided instead of a slot 80. For example, a plurality of holes may be provided in the connector plate 78 with appropriate holes being selected for the bolts according to the position of the tip receptor block 62 inside the blade 18.

Once the connector plate 78 has been attached to the blade 18, the blade tip connector 76 may be tested to ensure there is electrical continuity with the blade lightning-protection system 60.

Referring again to Figure 6, with the connector plate 78 attached to the blade 18, the tip extension 20 is fitted to the blade 18 by sliding (pushing or pulling) the tip extension 20 over the tip end 24 of the blade 18 in the direction of the arrows 102. As the location of the tip-extension connector 54 is precisely defined inside the tip extension 20, and the location of the blade tip connector 76 is precisely defined on the end surface 74 of the blade 18, the two connectors 54, 76 are mutually aligned during fitting of the tip extension 20. Moving the tip extension 20 in the direction of the arrows 102 causes the male connector 54 inside the tip extension 20 to insert into the socket 76a on the end surface 74 of the blade 18. This establishes a conductive connection between the tip-extension tip receptor 50 and the existing blade lightning protection system. The connection may be checked, for example visually inspected using an endoscope or borescope, which may be inserted through a small pre-drilled access hole (not shown) in the outer shell 28 of the tip extension 20 directly above or in close proximity to the connection.

After fitting the tip extension 20 to the blade 18, the lightning protection components 50, 52, 54 inside the tip extension 20 may then be tested for electrical continuity with the existing lightning protection system 60 in the blade 18. The tip extension 20 may then be bonded to the blade 18 by supplying adhesive between the tip extension 20 and the blade 18.

By virtue of the connectors 54, 76 discussed above, the lightning-protection components 50, 52, 54 inside the tip extension 20 effectively connect automatically to the existing lightning protection system 60 inside the blade 18 when the tip extension 20 is fitted. A plug-and-socket connection is effected in this example. The connection system is particularly advantageous since it is a 'blind' connection and avoids the need for local manual intervention to make the connection. As the connection is made deep inside the tip extension 20, manual intervention to make this connection may necessitate cutting through the tip extension 20 or providing large access holes in the tip extension 20 which may compromise the structural integrity of the tip extension 20. This is avoided by the present connection system, which allows the tip extension 20 to be fitted to the blade 18 and connected to the blade's lightning protection system 60 with relative ease. Notably no crimping or such like of cables is required in the present connection, which in comparison to alternative techniques of making such connections significantly facilitates the process of fitting the tip extension 20.

With the tip extension 20 fitted to the blade 18, any lightning strikes on the blade 18 would initially strike the tip-extension tip receptor 50. The lightning current would then be transmitted via the cable 52 inside the tip extension (Figure 6) to the tip-extension connector 54; from the tip-extension connector 54 to the blade-tip connector 76; from the blade-tip connector 76 to the connector plate 78 (see Figure 8); from the connector plate 78 into the bolt heads 100 and along the bolt shafts 98 into the blade tip receptor block 62; and from the blade tip receptor block 62 to earth via the existing down conductor cable 70 inside the blade 18.

It was discussed above that the male and female connectors 54, 76 form a push-fit connection. An optional and advantageous arrangement of these connectors 54, 76 will now be described in more detail with reference to Figures 9 and 10.

Figure 9 is a cross-sectional perspective view of a socket 76a forming a female connector 76, and Figure 10 is a cross-sectional perspective view of a male connector 54 received within the socket 76a. Referring to Figure 9, a pair of annular canted coil springs 106 are provided inside the socket 76a. The coil springs 106 are axially spaced apart and are retained within respective annular grooves 108 defined in the socket wall 110.

Referring to Figure 10, when the male connector 54 is inserted into the socket 76a, the springs 106 provide both the mechanical and electrical connection between the male and female components 54, 76. When the male connector 54 is inserted, each coil 106 deflects independently to compensate for contact and surface variations, which allows for tolerances between mating parts and accommodates variations in the insertion depth of the male connector 54. This is particularly advantageous when fitting the tip extension 20 since it may be difficult to control the insertion depth of the male connector 54 precisely when making a blind connection. The springs 106 sit within the annular grooves 82 of the male connector 54 (shown in Figure 7b) to retain the male connector 54 within the socket 76a.

The canted springs 106 are arranged to provide an easier insertion force than a pull-out force. In this example, a force of approximately 25 Newtons is required to insert the male connector 54, whereas a pull-out force of approximately 40 Newtons is required to release the male connector 54. This ensures that the male connector 54 will remain firmly within the socket 76a during use of the extended blade whilst at the same time allowing the tip extension 20 to be fitted with relative ease. The pull-out force is also advantageously sufficiently high to resist Lorentz forces from causing a disconnection during a lightning strike.

The coil springs 106 each provide a large number of contact points between the male connector 54 and the socket wall 110 thereby maximising the conductivity and current-carrying capability of the connection whilst minimising temperatures and avoiding 'hot-spots' in the connection during a lightning strike.

The female connector 76 shown in Figures 9 and 10 is particularly suitable for use as the blade-tip connector in the preceding examples, whilst the male connector 54 is particularly suitable for use as the tip-extension connector in the preceding examples. However, in all of the preceding examples, the connectors 54, 76 may be interchanged, such that the blade tip connector may be a male connector and the tip-extension connector may be a female connector. Other suitable connectors may also be used and the present invention in its broadest sense is not limited to the particular connectors described by way of example. For example connectors may be used that form an interference fit.

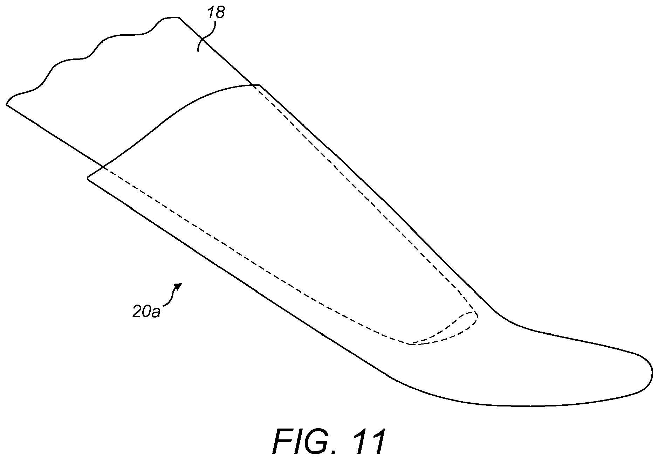

Figure 11 shows a tip extension 20a in accordance with another embodiment of the invention. In this example, the tip extension 20a is curved. When fitted to the blade 18, the tip extension 20a advantageously curves away from the tower 12 (see Figure 1) in order to prevent the blade 18 from striking the tower 12 in use. The risk of tower strike may increase when extending the length of a blade 18, so the curved tip extension 20a advantageously mitigates this risk. Alternatively, or additionally, the curved tip extension 20a may be suited to fit blades that already have a curved tip. Whilst not shown in Figure 11, the curved tip extension 20a is provided with lightning protection system components identical to those described in relation to the previous examples, and which connect to the existing lightning protection system in the blade 18 in the same way as previously described.

Many other modifications may be made to the specific examples described above without departing from the scope of the present invention as defined in the following claims.

## Claims

1. A wind turbine blade assembly (22) comprising:
a wind turbine blade (18) having a tip end (24) defining an end surface (74) of the blade;
a blade lightning protection system (60) provided inside the blade and having a blade tip receptor block (62) inside the tip end of the blade;
a blade tip connector (76) mounted at a predetermined position to the end surface of the blade and electrically connected to the blade tip receptor block;
a tip extension (20) in the form of a sock fitted over the tip end of the blade to extend the length of the blade, the tip extension including one or more lightning receptors (50);
a tip extension connector (54) fixed at a predetermined position inside the tip extension and electrically connected to the one or more lightning receptors of the tip extension;
wherein the predetermined positions of the blade tip connector (76) and the tip extension connector (54) are selected such that when the tip extension is fitted to the blade, the connecters are mutually aligned and form a push-fit connection inside the tip extension.

2. The wind turbine blade assembly of Claim 1, wherein the blade-tip connector (76) extends from the end surface (74) of the blade.

3. The wind turbine blade assembly of Claim 1 or Claim 2, wherein the blade-tip connector (76) and the tip-extension connector (54) form a plug-and-socket connection.

4. The wind turbine blade assembly of any preceding claim, wherein one of the blade tip connector (76) and the tip extension connector (54) is a female connector comprising a substantially cylindrical socket (76a), and the other connector is an elongate male connector sized to fit within the socket.

5. The wind turbine blade assembly of Claim 4, wherein one or more annular coil springs (106) are located within the socket (76a), the coil spring(s) being arranged to retain the male connector within the socket and to provide an electrical connection between the male and female connectors (76, 54), preferably wherein the one or more coil springs (106) are canted coil springs.

6. The wind turbine blade assembly of Claim 5, wherein the one or more coil springs (106) comprise a pair of coil springs that are axially spaced apart in the socket (76a).

7. The wind turbine blade assembly of any preceding claim, further comprising a connector plate (78) attached to the end surface (74) of the blade at a predetermined location and electrically connected to the blade tip receptor block (62) and wherein the blade tip connector (76) projects from the connector plate.

8. The wind turbine blade assembly of Claim 7, wherein the connector plate (78) is attached to the end surface (74) of the blade by one or more fixing devices (84), and the fixing devices are electrically connected to the blade tip receptor block (62).

9. The wind turbine blade assembly of Claim 8, wherein the connector plate (78) includes one or more mounting features arranged to enable a position of the fixing devices (84) to be selected according to the location of the tip receptor block (62) inside the blade to ensure an electrical connection to the tip receptor block, preferably wherein the one or more mounting features includes an elongate slot (80).

10. A tip extension (20) for the wind turbine blade assembly (22) of any preceding claim, wherein the tip extension is in the form of a sock and comprises an outer shell (28) defining a substantially hollow interior for receiving a tip end (24) of a wind turbine blade (18), and wherein the tip extension includes one or more lightning receptors (50) and a tip extension connector (54) fixed at a predetermined position within the interior of the tip extension and electrically connected to the lightning receptor(s),
**characterised in that**
the tip-extension connector being arranged to form a push-fit connection with a blade tip connector (76) provided at the tip end of the blade when the tip extension is fitted to the blade in order to connect the lightning receptor(s) of the tip extension to a lightning protection system (60) of the blade.

11. A method of fitting a tip extension (20) to a wind turbine blade (18), the method comprising:
providing a wind turbine blade (18) having a lightning protection system (60) inside the blade, the lightning protection system including a blade tip receptor block (62) inside a tip end (24) of the blade;
attaching a blade tip connector (76) to an end surface (74) of the blade in a predetermined position;
establishing an electrical connection between the blade tip connector and the blade tip receptor block;
providing a tip extension (20) in the form of a sock sized to fit over the tip end of the blade, the tip extension including one or more lightning receptors (50) and a tip extension connector (54) fixed in a predetermined position inside the tip extension and electrically connected to the one or more lightning receptors of the tip extension; and
sliding the tip extension over the tip end of the blade;
wherein the predetermined positions of the blade tip connector (76) and tip extension connector (54) are selected such that the two connectors are mutually aligned during fitting of the tip extension and such that sliding of the tip extension causes the two connectors to connect inside the tip extension to connect the one or more lightning receptors of the tip extension to the blade's lightning protection system.

12. The method of Claim 11, further comprising removing a tip (64) of the wind turbine blade (18) to define the end surface (74) prior to fitting the tip extension (20) to the blade.

13. The method of Claim 11 or Claim 12, further comprising attaching a connector plate (78) comprising the blade tip connector (76) to the end surface (74) of the blade (18) in a predetermined position.

14. The method of Claim 13, further comprising attaching the connector plate (78) by means of one or more bolts (84) that screw into the blade tip receptor block (62).

15. The method of Claim 14, further comprising selecting the position of the bolts (84) according to the position of the tip receptor block (62) inside the blade (18).

## Patentansprüche

1. Windkraftanlageblattanordnung (22), umfassend:
ein Windkraftanlageblatt (18), das ein Spitzenende (24) aufweist, das eine Endfläche (74) des Blatts definiert;
eine Blattblitzschutzeinrichtung (60), die innerhalb des Blatts bereitgestellt ist und einen Blattspitzenrezeptorblock (62) innerhalb des Spitzenendes des Blatts aufweist;
ein Blattspitzenverbindungsstück (76), das an einer vorbestimmten Position an der Endfläche des Blatts montiert ist und mit dem Blattspitzenrezeptorblock elektrisch verbunden ist;
eine Spitzenverlängerung (20) in der Form einer Socke, die über dem Spitzenende des Blatts angebracht ist, um die Länge des Blatts zu verlängern, wobei die Spitzenverlängerung einen oder mehrere Blitzrezeptoren (50) einschließt;
ein Spitzenverlängerungsverbindungsstück (54), das an einer vorbestimmten Position innerhalb der Spitzenverlängerung fixiert ist und mit dem einen oder den mehreren Blitzrezeptoren der Spitzenverlängerung elektrisch verbunden ist;
wobei die vorbestimmten Positionen des Blattspitzenverbindungsstücks (76) und des Spitzenverlängerungsverbindungsstücks (54) derart ausgewählt sind, dass die Verbindungsstücke aneinander ausgerichtet sind und eine Steckverbindung innerhalb der Spitzenverbindung bilden, wenn die Spitzenverlängerung am Blatt angebracht ist.

2. Windkraftanlageblattanordnung nach Anspruch 1, wobei sich das Blattspitzenverbindungsstück (76) von der Endfläche (74) des Blatts erstreckt.

3. Windkraftanlageblattanordnung nach Anspruch 1 oder Anspruch 2, wobei das Blattspitzenverbindungsstück (76) und das Spitzenverlängerungsverbindungsstück (54) eine Steckverbindung bilden.

4. Windkraftanlageblattanordnung nach einem der vorstehenden Ansprüche, wobei eines von dem Blattspitzenverbindungsstück (76) und dem Spitzenverlängerungsverbindungsstück (54) eine Buchse ist, die eine im Wesentlichen zylindrische Muffe (76a) umfasst, und das andere Verbindungstück ein langgestreckter Stecker ist, der dimensioniert ist, um innerhalb der Buchse angebracht zu sein.

5. Windkraftanlageblattanordnung nach Anspruch 4, wobei eine oder mehrere ringförmige Schraubenfedern (106) innerhalb der Buchse (76a) liegen, wobei die Schraubenfeder(n) eingerichtet ist (sind), um den Stecker innerhalb der Buchse zurückzuhalten und um eine elektrische Verbindung zwischen dem Stecker und der Buchse (76, 54) bereitzustellen, wobei vorzugsweise die eine oder die mehreren Schraubenfedern (106) abgeschrägte Schraubenfedern sind.

6. Windkraftanlageblattanordnung nach Anspruch 5, wobei die eine oder die mehreren Schraubenfedern (106) ein Paar Schraubenfedern umfassen, die in der Muffe (76a) axial beabstandet sind.

7. Windkraftanlageblattanordnung nach einem der vorstehenden Ansprüche, weiter eine Verbindungsplatte (78) umfassend, die an einer vorbestimmten Stelle an der Endfläche (74) des Blatts befestigt ist und mit dem Blattspitzenrezeptorblock (62) elektrisch verbunden ist und wobei das Blattspitzenverbindungsstück (76) von der Verbindungsplatte hervorsteht.

8. Windkraftanlageblattanordnung nach Anspruch 7, wobei die Verbindungsplatte (78) durch eine oder mehrere Fixiervorrichtungen (84) an der Endfläche (74) des Blatts befestigt ist und die Fixiervorrichtungen mit dem Blattspitzenrezeptorblock (62) elektrisch verbunden sind.

9. Windkraftanlageblattanordnung nach Anspruch 8, wobei die Verbindungsplatte (78) eine oder mehrere Montierungsmerkmale einschließt, die eingerichtet sind, um ein Auswählen einer Position der Fixiervorrichtungen (84) gemäß der Stelle des Blattspitzenrezeptorblocks (62) innerhalb des Blatts zu ermöglichen, um eine elektrische Verbindung mit dem Blattspitzenrezeptorblock zu gewährleisten, wobei vorzugsweise das eine oder die mehreren Montierungsmerkmale einen langgestreckten Schlitz (80) einschießen.

10. Spitzenverlängerung (20) für die Windkraftanlageblattanordnung (22) nach einem der vorstehenden Ansprüche, wobei die Spitzenverlängerung in der Form einer Socke ist und eine äußere Schale (28) umfasst, die einen im Wesentlichen hohlen Innerraum zum Aufnehmen eines Spitzenendes (24) eines Windkraftanlagenblatts (18) definiert, und wobei die Spitzenverlängerung einen oder mehrere Blitzrezeptoren (50) und ein Spitzenverlängerungsverbindungsstück (54) umfasst, das an einer vorbestimmten Position innerhalb des Innenraums der Spitzenverlängerung fixiert ist und mit dem (den) Blitzrezeptor(en) elektrisch verbunden ist,
**dadurch gekennzeichnet, dass**
das Spitzenverlängerungsverbindungsstück eingerichtet ist, um mit einem Blattspitzenverbindungsstück (76), das an der Blattspitze bereitgestellt ist, eine Steckverbindung zu bilden, wenn die Spitzenverlängerung am Blatt angebracht ist, um den (die) Blitzrezeptor(en) der Spitzenverlängerung mit einer Blitzschutzeinrichtung (60) des Blatts zu verbinden.

11. Verfahren des Anbringens einer Blattverlängerung (20) an einem Windkraftanlagenblatt (18), wobei das Verfahren umfasst:
Bereitstellen eines Windkraftanlagenblatts (18), das eine Blitzschutzeinrichtung (60) innerhalb des Blatts aufweist, wobei die Blitzschutzeinrichtung einen Blattspitzenrezeptorblock (62) innerhalb eines Spitzenendes (24) des Blatts einschließt;
Befestigen eines Blattspitzenverbindungsstücks (76) an einer Endfläche (74) des Blatts in einer vorbestimmten Position;
Aufbauen einer elektrischen Verbindung zwischen dem Blattspitzenverbindungsstück und dem Blattspitzenrezeptorblock;
Bereitstellen einer Spitzenverlängerung (20) in der Form einer Socke, die dimensioniert ist, um über dem Spitzenende des Blatts angebracht zu sein, wobei die Spitzenverlängerung einen oder mehrere Blitzrezeptoren (50) und ein Spitzenverlängerungsverbindungsstück (54) einschließt, das an einer vorbestimmten Position innerhalb der Spitzenverlängerung fixiert und mit dem einen oder den mehreren Blitzrezeptoren der Spitzenverlängerung elektrisch verbunden ist; und
Gleiten der Spitzenverlängerung über das Spitzenende des Blatts;
wobei die vorbestimmten Positionen des Blattspitzenverbindungstücks (76) und Spitzenverlängerungsverbindungsstücks (54) derart ausgewählt sind, dass die zwei Verbindungsstücke während Anbringen der Spitzenverlängerung aneinander ausgerichtet sind und derart, dass Gleiten der Spitzenverlängerung bewirkt, dass sich die zwei Verbindungsstücke innerhalb der Spitzenverlängerung verbinden, um den einen oder die mehreren Blitzrezeptoren der Spitzenverlängerung mit der Blitzschutzeinrichtung des Blatts zu verbinden.

12. Verfahren nach Anspruch 11, weiter umfassend Entfernen einer Spitze (64) des Windkraftanlagenblatts (18), um die Endfläche (74) zu definieren, vor Anbringen der Spitzenverlängerung (20) am Blatt.

13. Verfahren nach Anspruch 11 oder Anspruch 12, weiter umfassend Befestigen einer Verbindungsplatte (78), die ein Blattspitzenverbindungstück (76) umfasst, in einer vorbestimmten Position an der Endoberfläche (74) des Blatts (18).

14. Verfahren nach Anspruch 13, weiter umfassend Befestigen der Verbindungsplatte (78) mittels eines oder mehrerer Bolzen (84), die sich in den Blattspitzenrezeptorblock (62) einschrauben.

15. Verfahren nach Anspruch 14, weiter umfassend Auswählen der Position der Bolzen (84) gemäß der Position des Spitzenrezeptorblocks (62) innerhalb des Blatts (18).

## Revendications

1. Ensemble pale d'éolienne (22) comprenant :
une pale d'éolienne (18) présentant une extrémité de pale (24) définissant une surface d'extrémité (74) de la pale ;
un système de protection contre la foudre (60) fourni à l'intérieur de la pale et présentant un bloc récepteur de bout de pale (62) à l'intérieur de l'extrémité de pale de la pale ;
un connecteur de bout de pale (76) monté au niveau d'une position prédéterminée à la surface d'extrémité de la pale et connecté électriquement au bloc récepteur de bout de pale ;
une extension de bout (20) sous la forme d'une chaussette ajustée sur l'extrémité de pale de la pale pour étendre la longueur de la pale, l'extension de bout incluant un ou plusieurs récepteurs de foudre (50) ;
un connecteur d'extension de bout (54) fixé au niveau d'une position prédéterminée à l'intérieur de l'extension de bout et connectée électriquement à l'un ou aux plusieurs récepteurs de foudre de l'extension de bout ;
dans lequel les positions prédéterminées du connecteur de bout de pale (76) et du connecteur d'extension de bout (54) sont choisies de sorte que lorsque l'extension de bout est ajustée à la pale, les connecteurs sont alignés mutuellement et forment une connexion enfichable à l'intérieur de l'extension de bout.

2. Ensemble pale d'éolienne selon la revendication 1, dans lequel le connecteur de bout de pale (76) s'étend à partir de la surface d'extrémité (74) de la pale.

3. Ensemble pale d'éolienne selon la revendication 1 ou la revendication 2, dans lequel le connecteur de bout de pale (76) et le connecteur d'extension de bout (54) forment une connexion à enfichage.

4. Ensemble pale d'éolienne selon l'une quelconque des revendications précédentes, dans lequel un parmi le connecteur de bout de pale (76) et le connecteur d'extension de bout (54) est un connecteur femelle comprenant une douille sensiblement cylindrique (76a), et l'autre connecteur est un connecteur mâle allongé dimensionné pour s'ajuster au sein de la douille.

5. Ensemble pale d'éolienne selon la revendication 4, dans lequel un ou plusieurs ressorts hélicoïdaux annulaires (106) sont situés au sein de la douille (76a), le(s) ressort(s) hélicoïdal/hélicoïdaux étant agencé(s) pour retenir le connecteur mâle au sein de la douille et pour fournir une connexion électrique entre les connecteurs mâle et femelle (76, 54), de préférence dans lequel l'un ou les ressorts hélicoïdaux (106) sont des ressorts hélicoïdaux inclinés.

6. Ensemble pale d'éolienne selon la revendication 5, dans lequel l'un ou les ressorts hélicoïdaux (106) comprennent une paire de ressorts hélicoïdaux qui sont écartés axialement dans la douille (76a).

7. Ensemble pale d'éolienne selon l'une quelconque des revendications précédentes, comprenant en outre une plaque de connexion (78) attachée à la surface d'extrémité (74) de la pale au niveau d'un emplacement prédéterminé et connectée électriquement au bloc récepteur de bout de pale (62) et dans lequel le connecteur de bout de pale (76) dépasse à partir de la plaque de connecteur.

8. Ensemble pale d'éolienne selon la revendication 7, dans lequel la plaque de connecteur (78) est attachée à la surface d'extrémité (74) de la pale par un ou plusieurs dispositifs de fixation (84), et les dispositifs de fixation sont connectés électriquement au bloc récepteur de bout de pale (62).

9. Ensemble pale d'éolienne selon la revendication 8, dans lequel la plaque de connecteur (78) inclut un ou plusieurs éléments de montage agencés pour permettre à une position des dispositifs de fixation (84) d'être choisie selon l'emplacement du bloc récepteur de bout (62) à l'intérieur de la pale pour assurer une connexion électrique au bloc récepteur de bout, de préférence dans lequel l'un ou les éléments de montage incluent une fente allongée (80).

10. Extension de bout (20) pour l'ensemble pale d'éolienne (22) selon l'une quelconque des revendications précédentes, dans laquelle l'extension de bout est sous la forme d'une chaussette et comprend une coque externe (28) définissant un intérieur essentiellement creux pour recevoir une extrémité de pale (24) d'une pale d'éolienne (18), et dans laquelle l'extension de bout inclut un ou plusieurs récepteurs de foudre (50) et un connecteur d'extension de bout (54) fixé au niveau d'une position prédéterminée au sein de l'intérieur de l'extension de bout et connectée électriquement au(x) récepteur(s) de foudre,
**caractérisée en ce que**
le connecteur d'extension de bout étant agencé pour former une connexion enfichable avec un connecteur de bout de pale (76) fourni au niveau de l'extrémité de pale de la pale lorsque l'extension de bout est ajustée sur la pale de façon à connecter le(s) récepteur(s) de foudre de l'extension de bout au système de protection contre la foudre (60) de la pale.

11. Procédé d'ajustement d'une extension de bout (20) à une pale d'éolienne (18), le procédé comprenant les étapes consistant à :
fournir une pale d'éolienne (18) présentant un système de protection contre la foudre (60) à l'intérieur de la pale, le système de protection contre la foudre incluant un bloc récepteur de bout de pale (62) à l'intérieur d'une extrémité de pale (24) de la pale ;
attacher un connecteur de bout de pale (76) à une surface d'extrémité (74) de la pale dans une position prédéterminée ;
établir une connexion électrique entre le connecteur de bout de pale et le bloc récepteur de bout de pale ;
fournir une extension de bout (20) sous la forme d'une chaussette dimensionnée pour s'ajuster sur l'extrémité de pale de la pale, l'extension de bout incluant un ou plusieurs récepteurs de foudre (50) et un connecteur d'extension de bout (54) fixé dans une position prédéterminée à l'intérieur de l'extension de bout et connecté électriquement à l'un ou aux récepteurs de foudre de l'extension de bout ; et
faire glisser l'extension de bout sur l'extrémité de pale de la pale ;
dans lequel les positions prédéterminées du connecteur de bout de pale (76) et du connecteur d'extension de bout (54) sont choisies de sorte que deux connecteurs sont alignés mutuellement durant l'étape consistant à ajuster l'extension de bout et de sorte que l'étape consistant à faire glisser l'extension de bout amène les deux connecteurs à se connecter à l'intérieur de l'extension de bout pour connecter l'un ou les récepteurs de foudre de l'extension de bout au système de protection contre la foudre de la pale.

12. Procédé selon la revendication 11, comprenant en outre l'étape consistant à enlever un bout (64) de la pale d'éolienne (18) pour définir la surface d'extrémité (74) avant l'étape consistant à ajuster l'extension de bout (20) sur la pale.

13. Procédé selon la revendication 11 ou la revendication 12 comprenant l'étape consistant à attacher une plaque de connecteur (78) comprenant le connecteur de bout de pale (76) à la surface d'extrémité (74) de la pale (18) dans une position prédéterminée.

14. Procédé selon la revendication 13, comprenant en outre l'étape consistant à attacher la plaque de connecteur (78) au moyen d'un ou de plusieurs boulons (84) qui se vissent à l'intérieur du bloc récepteur de bout de pale (62).

15. Procédé selon la revendication 14, comprenant en outre l'étape consistant à choisir la position des boulons (84) selon la position du bloc récepteur de bout de pale (62) à l'intérieur de la pale (18).
